# EUROPEAN PATENT SPECIFICATION

(11) **EP 0 438 274 B1**
(45) Date of publication and mention of the grant of the patent: **18.06.1997**
(21) Application number: 91300297.8
(22) Date of filing: 16.01.1991
(51) Int. Cl.: H04L 12/56

(54) **Bursted and non-bursted data router**
Wegsucheinheit für Burst- und Nichtburst-Daten
Unité d'acheminement de données en rafales ou non en rafales

(30) Priority: 16.01.1990 US 464794
(43) Date of publication of application: 24.07.1991
(73) Proprietor: Hughes Aircraft Company, Los Angeles, California 90045-0066 (US)
(72) Inventor: Clebowicz, Brian A., Redondo Beach, California 90278 (US)
(74) Representative: Colgan, Stephen James

(56) References cited:
- EP-A- 0 239 937
- WO-A-88/09015
- INTERNATIONAL SWITCHING SYMPOSIUM vol. 3, March 1987, NEW YORK. US A. KITAMURA ET AL. 'High Speed and High Capabililty Packet Switching System Architecture for ISDN'

## Description

### BACKGROUND OF THE INVENTION

### Field of the Invention:

The present invention relates to data routing.

### Description of the Related Art:

Data routing systems route data from an input channel to an appropriate output channel. Data may be input and output bursted or non-bursted. For bursted data, typically all incoming bursts begin and end at the same time with a number of bursts making up a frame of burst data. For non-bursted data, the data is typically made up of packets of data which do not always begin or end on a burst boundary. Some data routing systems, for example those for certain satellite applications, require the ability to route and format both bursted and non-bursted data. A data router (packet switch) which handles both bursted and non-bursted data is described in WO 88/09015.

Many conventional data routers which handle bursted data, particularly those built for secure communications, require the ability to time deshuffle the order of incoming data bursts and to time shuffle the order of outgoing data bursts. In addition, output buffers must format the output data to obtain the proper burst rate and burst size. The conventional approach for data routing systems handling bursted data is to provide one dedicated input frame buffer for each input channel and two dedicated output frame buffers for each output channel, with one output frame buffer for data shuffling and one output frame buffer for data formatting. Thus, in conventional designs one additional frame buffer is required for each added input channel and two additional frame buffers are required for each added output channel. This becomes prohibitively expensive when frame sizes or the number of input/output channels is large because such additional memory adds significantly to the weight, size and power requirements of a system. For satellite systems, these mission critical parameters must be limited to minimize the high cost of satellite manufacture and launch.

Thus, there is a need in the art for a data routing system for bursted data requiring less memory for input data deshuffling and output data formatting and shuffling than current data routing systems. This need is addressed by the invention described in EP-A-0438275, published 24.07.91, which requires only one input burst buffer per input channel and one output frame buffer per output channel. However, because some data routing systems require the ability to handle both bursted and non-bursted data, there is an additional need in the art for a data routing system which requires less memory for bursted input data deshuffling and output data formatting and shuffling and has the ability to handle non-bursted data as well. In addition, there is a further need in the art for a data router which can handle bursted data in which the input bursts are not time aligned.

### SUMMARY OF THE INVENTION

The need in the art is addressed by the bursted and non-bursted data router and method for routing data of the present invention as specified in the claims hereinafter. The invention provides a data router that performs input data deshuffling and output data formatting and shuffling, and operates with both bursted and non-bursted input and output data using only one input buffer per input channel and one frame buffer per output channel. The router includes input channels for receiving input data, input burst buffers for storing the input data, input address controllers for providing input data storage information, output frame buffers for storing the input data in a deshuffled order and providing formatted and shuffled output data, output channels for transmitting the output data and a router controller for controlling the operation of the router. The advantageous design of the data router allows for input and output of both bursts and packets of data which do not have time aligned boundaries.

### BRIEF DESCRIPTION OF THE DRAWINGS

Fig. 1 shows a typical input for a data router with burst based input channels.

Fig. 2 shows a typical input for a data router with both burst based and non-burst based input channels.

Fig. 3 shows a block diagram of an illustrative embodiment of a bursted and non-bursted data router constructed in accordance with the teachings of the present invention.

Fig. 4 shows a block diagram of the input address controller of the bursted and non-bursted data router of the present invention.

Fig. 5 shows a block diagram of the output frame buffer of the bursted and non-bursted data router of the present invention.

### DESCRIPTION OF THE INVENTION

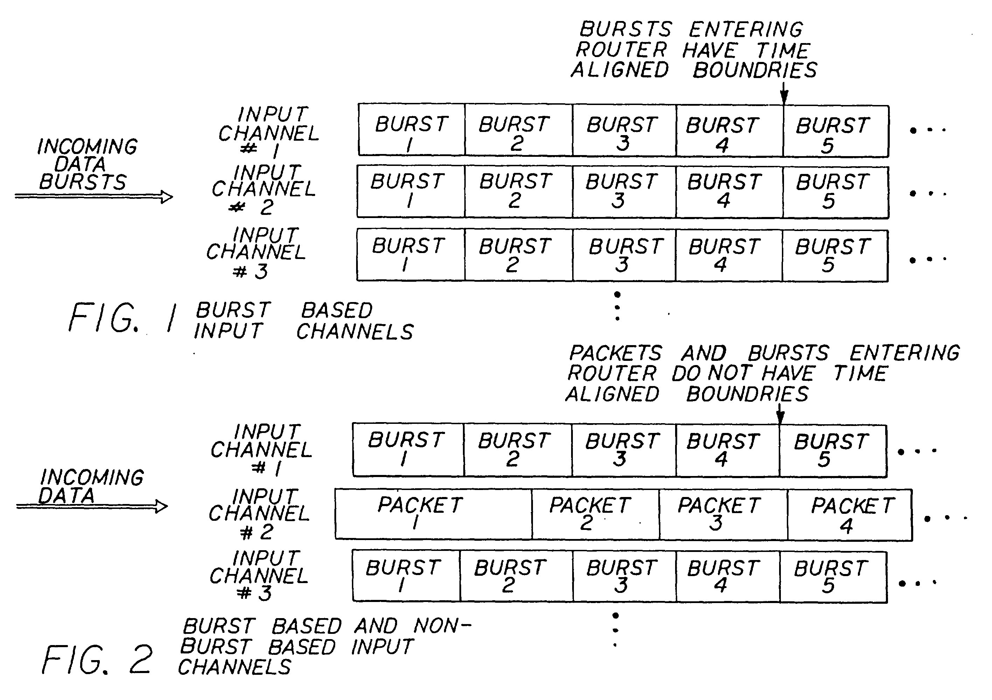

Illustrative embodiments and exemplary applications will now be described with reference to the accompanying drawings to disclose the advantageous teachings of the present invention. Generally, bus-based and other types of bursted data routers take advantage of the fixed period of all input bursts to perform routing. Fig. 1 shows a typical input for a data router with burst based input channels. As shown in Fig. 1, all incoming bursts from all channels have fixed lengths and begin and end at the same time with this time period being known as a burst period. Generally, a burst or group of bursts is assigned to one user, and all of the bursts are routed to a destination which may be a single channel or a group of channels. This is convenient since at the end of one burst period all input buffers will contain whole bursts, and each burst of data may then be routed to the appropriate destination. The period of time including the burst period and any associated guard time between burst periods is typically known as a routing cycle.

Fig. 2 shows a typical input for a data router with both burst based and non-burst based input channels. Non-bursted data is typically composed of packets of bits that may not begin or end on a burst boundary.. Therefore, at the end of a burst period, input buffers of non-bursted channels may contain parts of more than one data packet, and each part may need to be routed to a different destination. In order to route each data packet to the appropriate destination, a data router must keep track of the variable boundaries of the non-bursted data and change the destination of the data during the routing cycle.

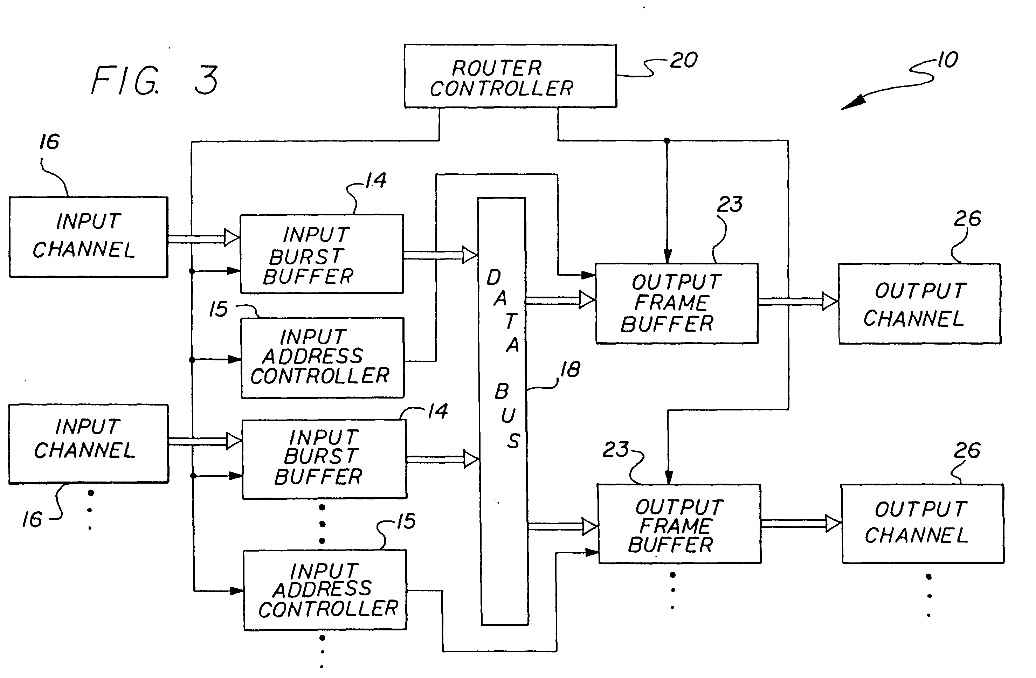

Fig. 3 shows a block diagram of an illustrative embodiment of a bursted and non-bursted data router 10 constructed in accordance with the teachings of the present invention. The router 10 incorporates the advantageous teachings of EP-A-0438275. The latter describes a router which uses less memory to deshuffle bursted input data and format and shuffle bursted output data than routers of the prior art. The teachings of the present invention provide a bursted and non-bursted data router 10 which also uses less memory than conventional routers and which handles both bursted and non-bursted data. The router 10 includes one input buffer 14 and one input address controller 15 per input channel 16, a data bus 18, a router controller 20 and one output frame buffer 23 per output channel 26. The router 10 operates under the control of the router controller 20 by first storing each input burst data or non-burst data received from the appropriate input channel 16 in the associated input buffer 14 during a burst period and then transferring this data through the data bus 18 to the appropriate output frame buffer 23 at the end of the routing cycle. The input data is stored in the output frame buffer 23 in a time deshuffled and formatted order. The input address controller 15 supplies an address offset to the output frame buffer 23 on subsequent routing cycles to allow for the storage of non-bursted data that was not completed in a first routing cycle. Once storage is complete, the bursted and non-bursted data is read out of the output frame buffer 23 in a time shuffled and formatted order for transmission on the appropriate output channel 26.

During configuration of the router 10, the user programs the router controller 20 including indicating the input channel 16 for each burst and packet of data, the storage locations in the appropriate output frame buffer 23 for this data and the data input and output rates. The router controller 20 may be implemented by a sequencer based controller or other type of circuit without departing from the scope of the present invention. Thus, during the operation of the router 10, the controller 20 provides the appropriate timing signals such that the input bursts and non-burst packets are received from the input channels 16 by the input buffers 14, stored in the output frame buffers' 23 memory locations reserved during configuration and transmitted on the output channels 26. Those skilled in the art will appreciate that a customer "black box" may be used to provide the controller 20 with information for controlling the deshuffling and shuffling of data as required for a specific application.

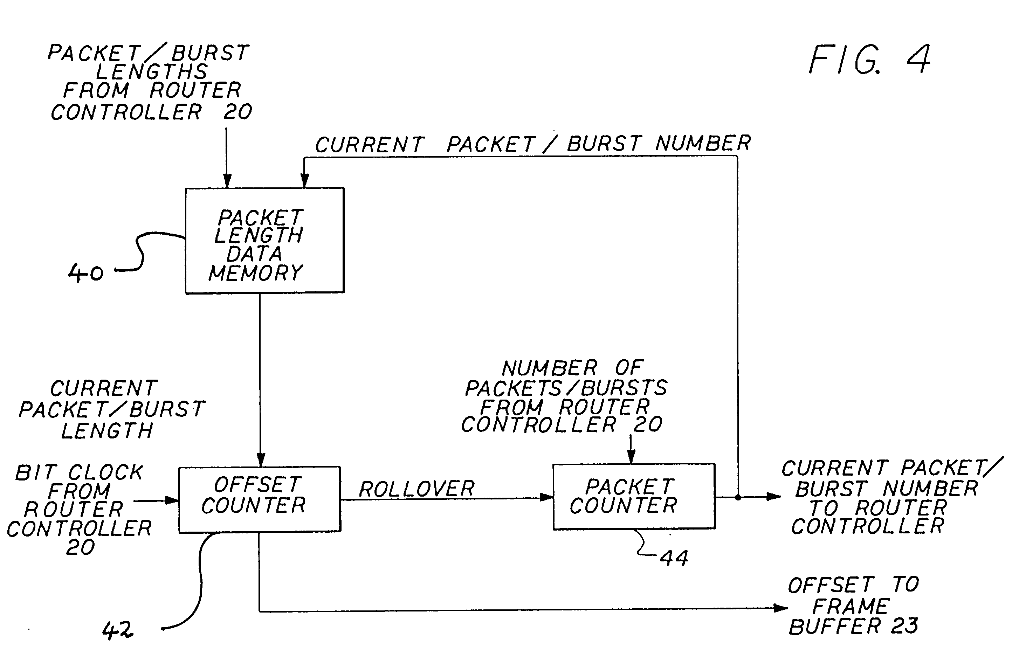

Fig. 4 shows a block diagram of the input address controller 15 of the router 10 of the present invention. The controller 15 includes a packet length data memory 40, an offset counter 42 and a packet counter 44. The packet length data memory 40 may be implemented by a random access memory (RAM) or other memory device, and the offset counter 42 and the packet counter 44 may both be implemented by counters or other circuitry without departing from the scope of the present invention. During configuration of the router 10, the packet/burst lengths are provided by the controller 20 and stored in the packet length data memory 40 and the number of packets/bursts is provided by the controller 20 to the packet counter 44. During operation, the offset counter 42 increments after each bit received by the input buffer 14 by counting transitions on the bit clock input signal provided by the controller 20. When the offset counter reaches the current packet/burst length provided by the packet length data memory 40, a transition is made on the rollover signal which is sent to the packet counter 44. The packet counter 44 then increments the current packet/burst number which is provided to the packet length data memory 40 such that the current packet/burst length changes to the new value. When the packet counter 44 rolls over, the counter 44 resets to zero and a new input frame begins starting with packet zero.

The offset counter 42 provides the offset value as an output and the packet counter 44 provides the current packet/burst number as an output. In the case of burst storage, at the end of a burst period the offset value will always be zero because a full burst is always stored in one burst period. However, at the end of a burst period for non-burst storage, the offset value will not be zero if a full packet was not stored during the burst period. The offset value will instead indicate where the storage of the packet data left off. Thus, the offset value and current packet/burst number can be used by the output frame buffers 23 to provide storage of the input data in the proper locations in the output frame buffers 23 as described more fully below.

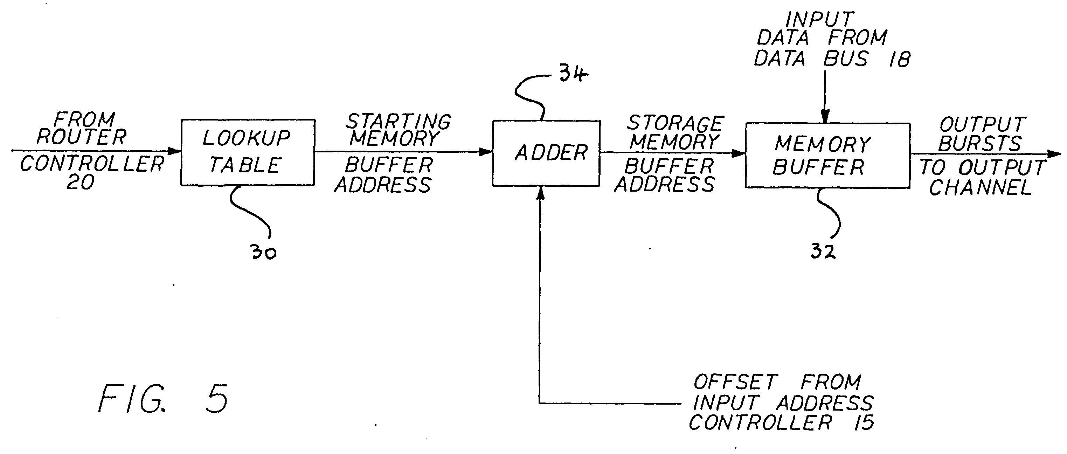

Fig. 5 shows a block diagram of the output frame buffer 23 of the router 10 of the present invention. The output frame buffer 23 contains a lookup table 30, a memory buffer 32 and an adder 34. In the preferred embodiment, the lookup table 30 is a RAM. Those skilled in the art will recognize that a read only memory (ROM) or other type of storage device may be utilized for the lookup table 30 without departing from the scope of the present invention. The memory buffer 32 may be implemented with a RAM or other type of storage device without departing from the scope of the present invention. Also, the adder 34 may be a discrete adder circuit or a processor based adder without departing from the scope of the present invention. Input burst and non-burst data is received by the memory buffer 32 from the data bus 18 and is stored in a deshuffled order in the memory buffer 32. The adder 34 provides the storage memory buffer address to the memory buffer 32 as the sum of the starting memory buffer address from the lookup table 30 and the offset value provided by the offset counter 42. For outputting the data, the lookup table 30 provides starting memory buffer addresses corresponding to a shuffled order for the output data. The router controller 20 controls the loading of the lookup table 30 with the appropriate starting memory buffer addresses and with providing the proper timing for inputting and outputting the burst and non-burst data with the proper format.

For the storage of burst or non-burst data in the memory buffer 32, the channel number provided by the router controller 20 and the current packet/burst number provided by the packet counter 44 will be input to the lookup table 30 which in turn will provide the appropriate starting memory buffer address for storage of the input data. The offset value provided by the offset counter 44 is then added to the starting memory buffer address by the adder 36 to provide the storage memory buffer address to the memory buffer 32. For the start of storage of either burst or non-burst data the offset value will be zero and storage will begin in the memory buffer at the starting memory buffer address. However, for non-burst data where a full packet was not stored during a burst period, the offset value will provide the proper offset for resumption of storage of the non-burst data during the next routing cycle. Where the end of a packet is reached during a routing cycle, the current packet/burst number will automatically increment to the next packet number and the offset counter 44 will reset the offset value to zero. Thus, storage will then continue with data from the next packet stored at the proper starting memory buffer address. Those skilled in the art will appreciate that the storage memory buffer address provided to the memory buffer 32 may be used to provide the address for the storage of each bit of data in the memory buffer 32 or it may be used for providing only the starting address at the beginning of each routing cycle with the memory buffer 32 or other circuitry providing subsequent addresses without departing from the scope of the present invention.

Thus, the present invention has been described herein with reference to a particular embodiment for a particular application. Those having ordinary skill in the art and access to the present teachings will recognize additional modifications applications and embodiments within the scope thereof. For example, those skilled in the art and with access to the teachings of the present invention may design data routers 10 with the number of input channels 16 and output channels 26 required for a particular application. In addition, the design of the router controller 20 may allow for deshuffling, formatting and shuffling of the input and output data including providing proper burst sizes and data rates as appropriate for a particular application without departing from the scope of the present invention. Clearly, the bursted and non-bursted data router 10 of the present invention is not for use solely in satellite systems, but may be utilized in other types of communication systems.

## Claims

1. A data router (10) for receiving both bursted and non-bursted input data and transmitting both bursted and non-bursted output data, bursted data beginning and ending at a known time and non-bursted data being received and transmitted as packets which do not necessarily begin or end at a bursted data beginning or end boundary, and for providing deshuffling of input data and formatting and shuffling of output data, said data router comprising:
input channel means (16) for receiving said input data;
input buffer means (14) for storing said input data as said input data is received from said input channel means;
input address controller means (15) for providing input data storage information, wherein said address controller means includes packet length memory means (40) for storing the number of bits in each packet or burst of said input data, offset counter means (42) for counting each bit of said input data as it is stored in said input buffer means to provide an offset count representing the current bit number being stored, and packet counter means for counting the number of packets and bursts of said input data as it is stored in said input buffer means to provide a current packet/burst number representing the current packet or burst being stored;
output buffer means (23) for receiving said input data from said input buffer means and storing said input data in a deshuffled order and formatting and shuffling said input data to provide said output data, wherein said output buffer means includes frame memory means (32) for storing said input data, lookup table means (30) for providing starting addresses for storage of said input data, and adder means (34) for adding said starting addresses to said offset count for providing storage addresses to said frame memory means;
output channel means (26) for transmitting said output data; and
controller means (20) for controlling the operation of said data router.

2. A data router according to claim 1 wherein said packet length memory means includes means for providing the total number of bits in said input data currently being stored in said input buffer means to said offset counter means.

3. A data router according to claim 1 wherein said offset counter means includes means for providing a rollover signal when said total number of bits in said input data has been stored in said input buffer means.

4. A data router according to claim 3 wherein said packet counter means includes means for using said rollover signal to count said number of packets and bursts of said input data stored in said input buffer means.

5. A data router according to claim 1 wherein said lookup table means includes means for providing said starting addresses corresponding to a deshuffled order for said input data for deshuffling of said input data and means for providing said starting addresses corresponding to a formatted and shuffled order for said output data for formatting and shuffling of said output data.

6. A data router according to claim 1 wherein said controller means is a sequencer based controller.

7. A data router according to claim 1 wherein said controller means includes means for providing timing signals to said output buffer means to control said formatting of said output data including providing proper output data burst sizes and output data transmission rates.

8. A data router according to claim 1 wherein said controller means includes means for loading said lookup table means with said starting addresses.

9. A method for routing data to provide deshuffling of bursted input data and non-bursted packets of input data and shuffling and formatting of bursted output data and non-bursted packets of output data, bursted data beginning and ending at a known time and non-bursted data being received and transmitted as packets which do not necessarily begin or end at a bursted data beginning or end boundary, including the steps of:
a) receiving input data from at least one input channel;
b) storing said input data in a buffer;
c) providing an offset count indicating the current bit of input data being stored;
d) providing a current packet/burst number indicating the number of the packet or burst of said input data currently being stored;
e) providing a starting address corresponding to a deshuffled and formatted address for each packet or burst of said input data;
f) adding said starting address to said offset count to provide a storage address indicating where each bit of said input data should be stored in a frame memory to deshuffle and format said input data;
g) storing said input data in said frame memory according to said storage address;
h) providing a shuffled starting address to indicate the starting address for each burst or packet of said output data to be read from said frame memory to provide shuffling of said output data;
i) reading said output data from said frame memory in a shuffled order according to said shuffled starting addresses;
j) transmitting said output data on at least one output channel.

10. A method according to claim 9 including the steps of providing the appropriate data rates and burst or packet sizes for said input data and output data.

## Patentansprüche

1. Wegsucheinheit (10) zum Empfangen von sowohl Burstals auch Nichtburst-Eingangsdaten und Übermitteln von sowohl Burst- als auch Nichtburst-Ausgangsdaten, wobei die Burst-Daten zu einem bekannten Zeitpunkt beginnen und enden und die Nichtburst-Daten als Pakete empfangen und übermittelt werden, die nicht notwendigerweise zu einem Burstdaten-Beginn oder einer Abschlußgrenze beginnen oder enden, und zum Bereitstellen der Entmischung von Eingangsdaten und Formatieren und Mischen von Ausgangsdaten, mit:
Eingangskanal (16) zum Empfangen der Eingangsdaten;
Eingangspuffer (14) zum Abspeichern der Eingangsdaten, wenn die Eingangsdaten vom Eingangskanal empfangen werden;
Eingangsadressen-Steuerungseinrichtung (15) zum Bereitstellen von Information für die Eingangsdaten-Speicherung, wobei die Adressen-Steuerungseinrichtung einen Paketlängen-Speicher (40) zum Abspeichern der Anzahl von Bits in jedem Paket oder Burst von Eingangsdaten, Offset-Zähler (42) zum Zählen eines jeden Bit der Eingangsdaten, wenn diese im Eingangspuffer abgespeichert werden, um eine die Bit-Zahl, die gerade abgespeichert wird, repräsentierende Offset-Zählung bereit zu stellen, und Paketzähler zum Zählen der Anzahl von Paketen und Bursts von Eingangsdaten, wenn diese im Eingangspuffer abgespeichert werden, um eine das Paket oder Burst, das gerade abgespeichert wird, repräsentierende aktuelle Paket-/Burst-Zahl bereit zu stellen, enthält;
Ausgangspuffer (23) zum Empfangen der Eingangsdaten vom Eingangspuffer und Abspeichern der Eingangsdaten in einer entmischten Ordnung und Formatieren und Mischen der Eingangsdaten, um die Ausgangsdaten zu liefern, worin der Ausgangspuffer einen Datenübertragungsblock-Speicher (32) zum Abspeichern der Eingangsdaten, Tabelleneinrichtung (30) zum Bereitstellen von Anfangsadressen für die Abspeicherung der Eingangsdaten, und einen Addierer (34) zum Hinzufügen der Anfangsadressen zur Offset-Zählung, um Speicheradressen für den Datenübertragungsblock-Speicher bereit zu stellen, enthält;
Ausgangskanal (26) zum Übermitteln der Ausgangsdaten; und
Steuerungseinrichtung (20) zum Steuern der Funktion der Wegsucheinheit.

2. Wegsucheinheit nach Anspruch 1, worin der Paketlängen-Speicher eine Einrichtung zum Bereitstellen der Gesamtzahl von Bits der Eingangsdaten, die gerade im Eingangspuffer abgespeichert werden, für den Offset-Zähler enthält.

3. Wegsucheinheit nach Anspruch 1, worin der Offset-Zähler eine Einrichtung zum Bereitstellen eines Überschlagssignals, wenn die Bit-Gesamtzahl der Eingangsdaten im Eingangspuffer abgespeichert worden ist, enthält.

4. Wegsucheinheit nach Anspruch 3, worin der Paketzähler eine Einrichtung zum Verwenden des Überschlagssignals zum Zählen der Anzahl von Paketen und Bursts der im Eingangspuffer abgespeicherten Eingangsdaten enthält.

5. Wegsucheinheit nach Anspruch 1, worin die Tabelleneinrichtung eine Einrichtung zum Bereitstellen der einer entmischten Ordnung der Eingangsdaten entprechenden Anfangsadressen zum Entmischen der Eingangsdaten und eine Einrichtung zum Bereitstellen der einer formatierten und gemischten Ordnung der Ausgangsdaten entprechenden Anfangsadressen zum Formatieren und Mischen der Ausgangsdaten enthält.

6. Wegsucheinheit nach Anspruch 1, worin die Steuerungseinrichtung eine auf einem Datenzuordner basierende Steuerungseinrichtung ist.

7. Wegsucheinheit nach Anspruch 1, worin die Steuerungseinrichtung eine Einrichtung zum Bereitstellen von Taktsignalen für den Ausgangspuffer enthält, um das Formatieren der Ausgangsdaten zu steuern, einschließlich dem Bereitstellen geeigneter Burstgrößen der Ausgangsdaten und Ausgangsdaten-Übertragungsgeschwindigkeiten.

8. Wegsucheinheit nach Anspruch 1, worin die Steuerungseinrichgung eine Einrichtung zum Belegen der Tabelleneinrichtung mit den Anfangsadressen enthält.

9. Verfahren zum Leiten von Daten, um eine Entmischung von Burst-Eingangsdaten und Nichtburst-Paketen von Eingangsdaten und ein Mischen und Formatieren von Burst-Ausgangsdaten und Nichtburst-Paketen von Ausgangsdaten, bereit zu stellen, wobei die Burst-Daten zu einem bekannten Zeitpunkt beginnen und enden und Nichtburst-Daten als Pakete, die nicht notwendigerweise zu einem Burstdaten-Beginn oder einer Abschlußgrenze beginnen oder enden, empfangen und übertragen werden, mit den Schritten:
a) Empfangen von Eingangsdaten von wenigstens einem Eingangskanal;
b) Abspeichern der Eingangsdaten in einem Puffer;
c) Bereitstellen einer Offset-Zählung, die das aktuelle Bit der Eingangsdaten, die gerade abgespeichert werden, anzeigt;
d) Bereitstellen einer aktuellen Paket-/Burst-Nummer, die die Nummer des Pakets oder Bursts der Eingangsdaten, die gerade abgespeichert werden, anzeigt;
e) Bereitstellen einer Anfangsadresse, die zu einer entmischten und formatierten Adresse für jedes Paket oder Burst der Eingangsdaten gehört;
f) Hinzufügen der Anfangsadresse zur Offset-Zählung, um eine Speicheradresse bereitzustellen, die anzeigt, wo jedes Bit der Eingangsdaten in einem Datenübertragungsblock-Speicher abgespeichert werden sollte, um die Eingangsdaten zu entmischen und zu formatieren;
g) Abspeichern der Eingangsdaten in dem Datenübertragungsblock-Speicher entsprechend der Speicheradresse;
h) Bereitstellen einer gemischten Anfangsadresse, um die Anfangsadresse für jedes Burst oder Paket der Ausgangsdaten, die aus dem Datenübertragungsblock-Speicher ausgelesen werden sollen, um ein Mischen der Ausgangsdaten bereit zu stellen, anzuzeigen;
i) Auslesen der Ausgangsdaten aus dem Datenübertragungsblock-Speicher in einer gemischten Ordnung gemäß der gemischten Anfangsadresse;
j) Übermitteln der Ausgangsdaten auf wenigstens einem Ausgangskanal.

10. Verfahren gemäß Anspruch 9, das die Schritte des Bereitstellens der geeigneten Datenübertragungsgeschwindigkeiten und Burst- oder Paketgrößen für die Eingangs- und die Ausgangsdaten einschließt.

## Revendications

1. Routeur de données (10) servant à recevoir des données d'entrée en rafales ou non et à transmettre des données de sortie en rafales ou non, les données en rafales commençant et se terminant à un moment connu et les données non en rafales étant reçues et transmises sous la forme de paquets ne commençant et ne se terminant pas obligatoirement à la frontière de début ou de fin des données en rafales et assurant le désentrelacement des données d'entrée et le formatage, ainsi que l'entrelacement des données de sortie, ledit routeur de données comprenant :
un moyen de voie d'entrée (16) pour recevoir lesdites données d'entrée ;
un moyen de tampon d'entrée (14) pour stocker lesdites données d'entrée au fur et à mesure de leur réception depuis ledit moyen de voie d'entrée ;
un moyen de contrôleur d'adresse d'entrée (15) pour fournir des informations de stockage sur les données d'entrée, dans lequel ledit moyen de contrôleur d'adresse inclut un moyen de mémoire de longueur de paquet (40) servant à stocker le nombre de bits de chaque paquet ou rafale de données d'entrée, un moyen de compteur de décalage (42) pour compter chaque bit desdites données d'entrée au fur et à mesure de son stockage dans ledit moyen de tampon d'entrée pour un comptage de décalage représentant le numéro du bit en cours stocké, et un moyen de compteur de paquets servant à compter le nombre de paquets et de rafales desdites données d'entrée au fur et à mesure de leur stockage dans ledit moyen de tampon d'entrée pour fournir un numéro de paquet/rafale en cours représentant le paquet en cours ou la rafale en cours stockés ;
un moyen de tampon de sortie (23) pour recevoir lesdites données d'entrée provenant dudit moyen de tampon d'entrée et stocker lesdites données d'entrée en ordre désentrelacé et pour formater et entrelacer lesdites données d'entrée pour fournir lesdites données de sortie, dans lequel ledit moyen de tampon de sortie inclut un moyen de mémoire de trame (32) pour stocker lesdites données d'entrée, un moyen de table de référence (30) pour fournir les adresses de début pour le stockage desdites données d'entrée, et un moyen additionneur (34) pour ajouter lesdites adresses de début audit comptage de décalage pour fournir les adresses de stockage audit moyen de mémoire de trame ; un moyen de voie de sortie (26) pour transmettre lesdites données de sortie ; et un moyen de contrôleur (20) pour commander le fonctionnement dudit routeur de données.

2. Routeur de données selon la revendication 1 dans lequel ledit moyen de mémoire de longueur de paquet inclut un moyen pour fournir le nombre total de bits contenu dans lesdites données d'entrée en cours de stockage dans ledit moyen de tampon d'entrée audit moyen de compteur à décalage.

3. Routeur de données selon la revendication 1 dans lequel ledit moyen de compteur à décalage inclut un moyen fournissant un signal de basculement lorsque ledit nombre total de bits desdites données d'entrée a été stocké dans ledit moyen de tampon d'entrée.

4. Routeur de données selon la revendication 3, dans lequel ledit moyen de compteur de paquets inclut un moyen permettant d'utiliser ledit signal de basculement pour compter ledit nombre de paquets et de rafales desdites données d'entrée stockées dans ledit moyen de tampon d'entrée.

5. Routeur de données selon la revendication 1 dans lequel ledit moyen de table de référence inclut un moyen fournissant lesdites adresses de début correspondant à un ordre désentrelacé desdites données d'entrée pour désentrelacer lesdites données d'entrée et un moyen pour fournir lesdites adresses de début correspondant à un ordre formaté et entrelacé desdites données de sortie pour formater et entrelacer lesdites données de sortie.

6. Routeur de données selon la revendication 1 dans lequel ledit moyen de contrôleur est un contrôleur du type à séquenceur.

7. Routeur de données selon la revendication 1 dans lequel ledit moyen de contrôleur inclut un moyen pour fournir des signaux de synchronisation audit moyen de tampon de sortie afin de commander ledit formatage desdites données de sortie y compris la fourniture des tailles appropriées des rafales de données de sortie et les débits de transmission appropriés des données de sortie.

8. Routeur de données selon la revendication 1 dans lequel ledit moyen de contrôleur inclut un moyen pour charger lesdites adresses de début dans ledit moyen de table de référence.

9. Procédé de routage de données assurant le désentrelacement des données d'entrée en rafales et des paquets de données d'entrée non en rafales ainsi que l'entrelacement et le formatage des données de sortie en rafales et des paquets de données de sortie non en rafales, les données en rafales commençant et se terminant à un moment connu et les données non en rafales étant reçues et transmises sous la forme de paquets ne commençant et ne se terminant pas obligatoirement à une frontière de début ou de fin des données en rafales, comprenant les étapes suivantes :
a) réception des données d'entrée provenant d'au moins une voie d'entrée ;
b) stockage desdites données d'entrée dans un tampon;
c) fourniture d'un comptage de décalage indiquant le bit en cours des données d'entrée en cours de stockage ;
d) fourniture du numéro du paquet ou de la rafale en cours indiquant le numéro du paquet ou de la rafale desdites données d'entrée en cours de stockage ;
e) fourniture d'une adresse de début correspondant à une adresse désentrelacée et formatée pour chaque paquet ou rafale desdites données d'entrée ;
f) ajout de ladite adresse de début audit comptage de décalage pour fournir une adresse de stockage indiquant où il faut stocker chaque bit desdites données d'entrée dans une mémoire de trame pour désentrelacer et formater lesdites données d'entrée ;
g) stockage desdites données d'entrée dans ladite mémoire de trame d'après ladite adresse de stockage ;
h) fourniture d'une adresse de début entrelacée pour indiquer l'adresse de début de chaque rafale ou paquet desdites données de sortie à lire dans ladite mémoire de trame pour assurer l'entrelacement desdites données de sortie ;
i) lecture desdites données de sortie dans ladite mémoire de trame dans un ordre entrelacé en fonction desdites adresses de début entrelacées ;
j) émission desdites données de sortie sur au moins une voie de sortie ;

10. Procédé selon la revendication 9 comprenant les étapes de fourniture des débits de données appropriés et des tailles appropriées de rafales et de paquets pour lesdites données d'entrée et données de sortie.
